# EUROPÄISCHE PATENTSCHRIFT

(11) **EP 3 889 424 B1**
(45) Veröffentlichungstag und Bekanntmachung des Hinweises auf die Patenterteilung: **20.12.2023**
(21) Anmeldenummer: 20167997.4
(22) Anmeldetag: 03.04.2020
(51) Int. Cl.: F03D 7/04, F03D 80/50, G06F 21/31, G07C 9/23, G06F 21/34, G06F 21/35

(54) **VERFAHREN FÜR EINE ZUGRIFFSKONTROLLE AUF EINE WINDENERGIEANLAGENSTEUERUNG SOWIE WINDENERGIEANLAGENSTEUERUNG DAFÜR**
METHOD FOR CONTROLLING ACCESS TO WIND ENERGY PLANT CONTROL AND WIND ENERGY PLANT CONTROL FOR SAME
PROCÉDÉ DE COMMANDE D'ACCÈS À UNE COMMANDE D'ÉOLIENNE AINSI QUE COMMANDE D'ÉOLIENNE ASSOCIÉE

(43) Veröffentlichungstag der Anmeldung: 06.10.2021
(73) Patentinhaber: Wobben Properties GmbH, 26607 Aurich (DE)
(72) Erfinder: Seesko, Mathias, 24211 Preetz (DE)
(74) Vertreter: Eisenführ Speiser

(56) Entgegenhaltungen:
- EP-A1- 2 287 811
- WO-A1-2006/056881
- DE-A1-102015 200 209
- US-A1- 2007 245 150

## Beschreibung

Die Erfindung betrifft den Bereich der Windenergieanlagen und hierbei insbesondere eine Zugriffskontrolle auf eine Windenergieanlagensteuerung einer Windenergieanlage. Eine Windenergieanlagensteuerung steuert und/oder regelt üblicherweise den Betrieb einer Windenergieanlage. Beispielsweise ist in der Windenergieanlagensteuerung eine Betriebskennlinie hinterlegt, die in Abhängigkeit eines vorherrschenden Windes und einer gewünschten Menge an zu erzeugender elektrischer Energie aus dem vorherrschenden Wind Einstellungen der Windenergieanlage vornimmt, um die Windenergieanlage gemäß den Voraussetzungen zu betreiben.

Im normalen Betrieb einer Windenergieanlage steuert und/oder regelt die Windenergieanlagensteuerung daher den Betrieb der Windenergieanlage abhängig von den genannten und weiteren Vorgaben im Wesentlichen automatisch ohne die grundsätzliche Notwendigkeit einer den Betrieb überwachenden oder steuernden Person. Dennoch ist es nötig, einen Zugriff auf die Windenergieanlagensteuerung durch einen Nutzer zu erlangen, wenn beispielsweise ein Betrieb, etwa durch Anpassen der Betriebskennlinie, geändert werden oder eine Funktion einer Software der Windenergieanlagensteuerung angepasst werden muss.

Um einem berechtigten Nutzer einen Zugriff auf eine Windenergieanlagensteuerung zu ermöglichen und unberechtigten Personen einen Zugriff zu versagen, weist die Windenergieanlagensteuerung üblicherweise eine Zugriffskontrolle auf, bei der Zugangsdaten, wie ein Benutzername und ein Passwort, abgefragt werden. Die Windenergieanlagensteuerung selbst ist dann mit einem übergeordneten globalen Server, beispielsweise eines Windenergieanlagenherstellers über eine Datenverbindung verbunden, in dem Zugangsdaten, nämlich Benutzernamen und Passwörter, hinterlegt sind. Die Windenergieanlagensteuerung prüft damit nach einer Eingabe eines Benutzernamens sowie eines Passworts über den globalen Server, ob und in welchem Maße ein Nutzer berechtigt ist auf die Windenergieanlagensteuerung zuzugreifen. Der Zugriff auf die Windenergieanlagensteuerung wird dann im Maße der auf dem Server hinterlegten Berechtigung gewährt oder verhindert.

Insbesondere in abgelegenen Gebieten, in denen zeitweise jedoch keine Datenverbindung der Windenergieanlagensteuerung mit dem Server möglich ist oder unmittelbar nach Aufstellung einer Windenergieanlage, bei der beispielsweise eine Datenverbindung zwischen der Windenergieanlagensteuerung der neu aufgestellten Windenergieanlage und dem Server noch nicht eingerichtet ist, lassen sich jedoch Benutzername und Passwort sowie die daraus resultierende Zugriffsberechtigung nicht vom Server abfragen. Somit ist ein Zugriff auf die Windenergieanlagensteuerung, wie es soeben beschrieben ist, nicht möglich.

Zur Umgehung dieser Problematik wurde bereits diskutiert, Benutzernamen und Passwörter unmittelbar auf einer Windenergieanlagensteuerung mit den nötigen Zugriffsrechten zu hinterlegen. Hierzu müsste jedoch jede Windenergieanlagensteuerung individuell, da nicht jeder weltweit mögliche Nutzer in jeder Windenergieanlage hinterlegt werden kann, vorprogrammiertwerden. Aufgrund dieses nicht handhabbaren Aufwands und weiterer damit verbundener Schwierigkeiten, wie beispielsweise eines Wechsels eines in einer Windenergieanlage zugriffsberechtigten durch Zugangsdaten hinterlegten Person, scheidet diese Möglichkeit aus.

Eine weitere Möglichkeit eine jedem Nutzer bekannte Zugriffsberechtigung auf einer Windenergieanlagensteuerung zu hinterlegen wäre weiterhin zu unsicher, insbesondere da insbesondere zur Fehlerrückverfolgung auch personalisiert in der Windenergieanlagensteuerung hinterlegt werden muss, welcher Nutzer eine Änderung vorgenommen hat. Daher ist beispielsweise aus Dokument EP 2 287 811 B1 bekannt, einen Benutzernamen und ein Passwort vorzusehen, wobei das Passwort derart erzeugt wurde, dass hiermit eine Berechtigung des über den Benutzernamen identifizierten Nutzers in der Windenergieanlagensteuerung überprüft werden kann. Durch die Eingabe des Benutzernamens lässt sich eine Fehlerrückverfolgung auf eine Person, die Zugriff hatte, ermöglichen, wenn dies nötig ist. Aufgrund der unmittelbaren Beziehung zwischen der Benutzerkennung und des zur Berechtigung dieser Benutzerkennung verwendeten Passworts kann jedoch das Passwort bei Kenntnis eines Verschlüsselungsalgorithmusses leicht von unberechtigten Personen erzeugt werden, um unberechtigt einen Zugriff zu erlangen.

Aufgabe der vorliegenden Erfindung ist es daher, eine Zugriffskontrolle auf eine Windenergieanlagensteuerung zu finden, die einerseits unabhängig von einer Datenverbindung der Windenergieanlagensteuerung zu einem externen Server ist und andererseits einen sicheren Zugriff auf die Windenergieanlagensteuerung ermöglicht.

Die Erfindung betrifft hierzu ein Verfahren für eine Zugriffskontrolle nach Anspruch 1.

Gemäß dem Verfahren für eine Zugriffskontrolle auf eine Windenergieanlagensteuerung umfasst dieses die im Folgenden beschriebenen Schritte. Die Schritte werden mit einer Windenergieanlagensteuerung durchgeführt.

Zunächst wird eine Zeichenfolge mit einer Eingabevorrichtung der Windenergieanlagensteuerung abgefragt. Daraufhin wird eine Bestätigung über eine eingegebene Zeichenfolge von der Eingabevorrichtung empfangen. Weiter wird die eingegebene Zeichenfolge oder eine aus der eingegebenen Zeichenfolge abgeleitete Zeichenfolge mit einem vordefinierten Verfahren entschlüsselt.

Weiterhin wird eine Prüfsumme für eine vordefinierte erste Auswahl von Zeichen der entschlüsselten Zeichenfolge erzeugt. Danach wird die erzeugte Prüfsumme mit einer vordefinierten zweiten Auswahl von Zeichen der entschlüsselten Zeichenfolge verglichen. Ist der Vergleich der erzeugten Prüfsumme mit der zweiten vordefinierten Auswahl von Zeichen positiv, so werden aus einer vordefinierten dritten Auswahl von Zeichen der entschlüsselten Zeichenfolge Nutzerrechte extrahiert. Insbesondere wird die dritte vordefinierte Auswahl von Zeichen der entschlüsselten Zeichenfolge als Nutzerrechte interpretiert. Nach dem Extrahieren der Nutzerrechte aus der dritten vordefinierten Auswahl von Zeichen wird insbesondere, wenn weitere vordefinierte Voraussetzungen erfüllt sind, ein Zugriff auf die Windenergieanlagensteuerung in Abhängigkeit von den Nutzerrechten bereitgestellt. Im Falle eines negativen Vergleichs der vordefinierten zweiten Auswahl von Zeichen der entschlüsselten Zeichenfolge mit der Prüfsumme wird hingegen der Zugriff auf die Windenergieanlagensteuerung verhindert.

Demnach wird also eine eingegebene Zeichenfolge, die einem Nutzer bereitgestellt wird, entschlüsselt. Ist die eingegebene Zeichenfolge korrekt, durchläuft diese Entschlüsselung mit dem Ergebnis, dass eine Prüfsumme aus einer Auswahl von Zeichen der entschlüsselten Zeichenfolge erzeugt werden kann, die anhand einer weiteren vordefinierten Auswahl von Zeichen der entschlüsselten Zeichenfolge mit positivem Ergebnis verglichen werden kann. Ist die eingegebene Zeichenfolge nicht korrekt, so schlägt der Vergleich fehl.

Durch dieses Verfahren lässt sich somit prüfen, ob die abgefragte und eingegebene Zeichenfolge, die entsprechend den zu erfüllenden Voraussetzungen zuvor generiert werden muss, korrekt oder inkorrekt ist und somit einem Nutzer einen Zugriff gewähren kann. Die Zeichenfolge selbst enthält somit Nutzerrechte, also eine Berechtigung zum Zugriff auf die Windenergieanlagensteuerung einerseits und ermöglicht gleichzeitig eine Überprüfung, ob diese Berechtigung tatsächlich vergeben werden darf. Dies geschieht durch den Vergleich. Eine Datenverbindung mit einem Server ist somit nicht nötig.

Eine Zeichenfolge bezeichnet hier beispielsweise Buchstaben in großer oder kleiner Schreibweise und/oderZahlen. Eine Eingabevorrichtung ist beispielsweise ein berührungsempfindlicher Bildschirm oder eine Tastatur in Kombination mit einem Bildschirm. Ein vordefiniertes Verfahren zum Entschlüsseln ist vorzugsweise ein standardisiertes Verschlüsselungsverfahren, dessen Schritte in der Windenergieanlagensteuerung hinterlegt sind. Die vordefinierten Auswahlen von Zeichen der entschlüsselten Zeichenfolge bezeichnen jeweils entweder einzelne oder mehrere Zeichen, wie Buchstaben oder Zahlen oder auch einzelne oder mehrere Bits oder Bytes, die Buchstaben oder Zahlen entsprechen. Unter vordefinierte Auswahl ist insbesondere ein oder mehrere Zeichen der Zeichenfolge, die an vordefinierten Positionen innerhalb der Zeichenfolge positioniert sind, zu verstehen. Beispielsweise entspricht die erste Auswahl den ersten 30 Bit der entschlüsselten Zeichenfolge und die nächsten 18 Bit der zweiten Auswahl.

Ein positiver Vergleich liegt insbesondere dann vor, wenn die erzeugte Prüfsumme, nämlich insbesondere die Zeichen oder Bitfolge, mit den Zeichen oder einer Bitfolge der vordefinierten zweiten Auswahl von Zeichen der entschlüsselten Zeichenfolge selbst oder einer daraus abgeleiteten Zeichenfolge übereinstimmt. Ein negativer Vergleich liegt entsprechend dann vor, wenn keine Übereinstimmung vorliegt.

Gemäß einer ersten Ausführungsform umfasst das Verfahren weitere folgende Schritte. Weiterhin wird aus einer vordefinierten vierten Auswahl von Zeichen der entschlüsselten Zeichenfolge eine Nutzerkennung extrahiert. Die Nutzerkennung wird daraufhin in einem Speicher der Windenergieanlagensteuerung gespeichert. Demnach enthält die abgefragte Zeichenfolge nach Entschlüsselung nicht nur Nutzerrechte, sondern auch eine Nutzerkennung. Die Nutzerkennung kann im Speicher hinterlegt werden, um zu protokollieren, welcher Nutzer basierend auf seinen Nutzerrechten Modifikationen an der Windenergieanlagensteuerung durch einen Zugriff vornimmt. Dies dient zur Nachvollziehbarkeit und Rückverfolgung auf einen eindeutigen Nutzer, insbesondere im durch die Änderung hervorgerufenen Fehlerfall.

Gemäß einer weiteren Ausführungsform umfasst das Verfahren nach dem Empfangen einer Bestätigung über eine eingegebene Zeichenfolge einen Schritt, bei dem geprüft wird, ob die eingegebene Zeichenfolge nur Zeichen einer vordefinierten Menge von Zeichen umfasst. Die vordefinierte Menge von Zeichen, die insbesondere als Zeichensatz bezeichnet werden kann, ist insbesondere der Zeichensatz eines vorbestimmten Kodierverfahrens, wie beispielsweise des base64 Kodierverfahrens. Zusätzlich oder alternativ wird geprüft, ob die eingegebene Zeichenfolge eine vorbestimmte Anzahl von Zeichen umfasst. Im Falle, dass die Prüfung positiv ist, werden die weiteren Schritte des Verfahrens ausgeführt. Im Falle, dass die Prüfung negativ ist, wird der Zugriff auf die Windenergieanlagensteuerung, insbesondere ohne das Ausführen weiterer Schritte, verhindert.

Eine positive Prüfung liegt vor, wenn die eingegebene Zeichenfolge nur Zeichen der vordefinierten Menge umfasst und/oder einer vorbestimmten Anzahl von Zeichen entspricht. Eine Prüfung ist als negativ zu bezeichnen, wenn die eingegebene Zeichenfolge auch Zeichen umfasst, die nicht der vordefinierten Menge zuzuordnen sind, und/oder die Anzahl der Zeichen der eingegebenen Zeichenfolge nicht der vorbestimmten Anzahl entspricht.

Ein weiterer Sicherheitsfaktor wird somit vom Verfahren umfasst.

Gemäß einer weiteren Ausführungsform wird vor dem Entschlüsseln aus der eingegebenen Zeichenfolge eine abgeleitete Zeichenfolge durch Dekodieren mit einem vorbestimmten Kodierverfahren, wie dem base64 Kodierverfahren, erzeugt. Die eingegebene Zeichenfolge kann somit andere Zeichen enthalten, als die abgeleitete Zeichenfolge. Beispielsweise kann die eingegebene Zeichenfolge aus Buchstaben und Zahlen bestehen, wohingegen die abgeleitete Zeichenfolge vorzugsweise eine Bitfolge darstellt, die dann für ein Verschlüsselungsverfahren verwendet werden kann. Eine einfachere Eingabe ohne Reduzierung der Sicherheitsanforderungen sowie eine bessere Verarbeitbarkeit durch einen Prozessor der Windenergieanlagensteuerung zum Entschlüsseln ist somit gegeben.

Gemäß einer weiteren Ausführungsform wird geprüft, ob die extrahierten Nutzerrechte einer Menge einer vordefinierten Art von Nutzerrechten zuordenbar ist. Eine erste vordefinierte weitere Voraussetzung ist dann erfüllt, wenn diese Prüfung positiv ist, also die extrahierten Nutzerrechte der Menge der vordefinierten Art von Nutzerrechten zuordenbar ist.

Es wird somit ein weiterer Sicherheitsfaktor eingeführt. Vordefinierte Arten von Nutzerrechten sind beispielsweise unterschiedliche Zeichenfolgen, die jeweils für Schreibzugriff, Lesezugriff, Schreib- und Lesezugriff, Schreibzugriff auf bestimmten Speicherbereichen, Lesezugriff auf bestimmte Speicherbereiche, sowie Schreib- und Lesezugriff auf bestimmte Speicherbereiche.

Gemäß einer weiteren Ausführungsform umfasst das Verfahren und insbesondere der Schritt zur Abfrage der Zeichenfolge eine Abfrage eines Passworts über die Eingabevorrichtung der Windenergieanlagensteuerung. Der Schritt des Empfangens einer Bestätigung umfasst zusätzlich das Empfangen einer Bestätigung über ein eingegebenes Passwort. Ferner umfasst das Verfahren das Prüfen des Passworts, wobei eine zweite vordefinierte weitere Voraussetzung erfüllt ist, wenn die Prüfung des Passworts positiv ist. Die Prüfung ist positiv, wenn das Passwort mit einem hinterlegten oder in der Windenergieanlagensteuerung generierten Passwort übereinstimmt. Eine positive Passwortprüfung umfasst somit, dass das Passwort gültig ist. Ein weiterer Sicherheitsfaktor ist somit geschaffen.

Gemäß einer weiteren Ausführungsform ist das Passwort ein Einmalpasswort, das auch OTP genannt wird. Vorzugsweise umfasst das Verfahren dabei das Erstellen des Einmalpassworts mit einem externen Passwortgenerator, insbesondere auf einem mobilen Gerät, wie beispielsweise einem Laptop oder einem Mobiltelefon.

Gemäß einer weiteren Ausführungsform wird die Prüfsumme für die vordefinierte erste Auswahl von Zeichen der entschlüsselten Zeichenfolge durch Anwendung eines cha1-Verfahrens auf die erste Auswahl berechnet. Ein bekannter Algorithmus ist somit in der Windenergieanlagensteuerung verwendbar.

Gemäß einer weiteren Ausführungsform umfasst das Verfahren das Senden einer Nachricht, insbesondere einer Short-Message-Service-Nachricht, SMS-Nachricht, an eine für die Nutzerkennung, die aus der vordefinierten vierten Auswahl von Zeichen der entschlüsselten Zeichenfolge extrahiert wurde, hinterlegt ist, insbesondere, wenn der Zugriff auf die Windenergieanlagensteuerung bereitgestellt wird. Alternativ wird die Nachricht an eine hinterlegte Telefonnummer unabhängig von der Nutzerkennung übertragen.

Die Nachricht kann, wenn zwischenzeitlich eine Datenverbindung wiederhergestellt ist, über diese Datenverbindung gesendet werden oder wird dann abgesendet, sobald wieder eine Datenverbindung besteht.

Weiterhin betrifft das Verfahren ein Erzeugen einer Zeichenfolge zum Eingeben in eine Eingabevorrichtung einer Windenergieanlagensteuerung für ein Verfahren, insbesondere nach einer der vorgenannten Ausführungsformen. Hierbei umfasst das Verfahren insbesondere die Schritte, dass zunächst eine Nutzerkennung sowie Nutzerrechte in Form von Zeichen bereitgestellt werden und eine Prüfsumme in Abhängigkeit dieser Zeichen erstellt wird. Daraufhin wird die Prüfsumme zusammen mit der Nutzerkennung und den Nutzerrechten kodiert. Das Ergebnis der Kodierung wird verschlüsselt.

Weiterhin betrifft die Erfindung ein Computerprogrammprodukt, das Instruktionen umfasst, das Verfahren nach einer der vorgenannten Ausführungsformen auszuführen, wenn die Instruktionen auf einem Computer, Rechner oder Prozessor, insbesondere einer Windenergieanlagensteuerung, ausgeführt werden.

Weiterhin betrifft die Erfindung eine Windenergieanlage mit einer Windenergieanlagensteuerung, die eingerichtet ist, die Schritte des Verfahrens auszuführen. Zudem umfasst die Erfindung einen Windparkregler mit einer Windenergieanlagensteuerung zum Ausführen der Schritte des Verfahrens.

Weitere Ausführungsformen ergeben sich anhand der in den Figuren näher erläuterten Ausführungsbeispielen. Hierbei zeigen:
- Figur 1: eine Windenergieanlage,
- Figur 2: die Schritte des Verfahrens für eine Zugriffskontrolle einer Windenergieanlagensteuerung und
- Figur 3: die Schritte zum Herstellen einer Zeichenfolge für die Zugriffskontrolle.

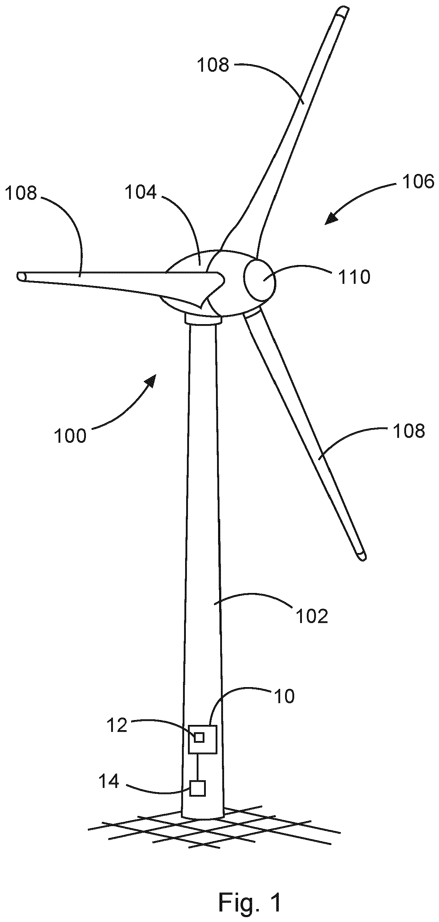

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Figur 1 zeigt weiter eine Windenergieanlagensteuerung 10 mit einem Prozessor 12, mit der eine Eingabevorrichtung 14 verbunden ist. Die Eingabevorrichtung 14 dient zur Eingabe einer Zeichenfolge und eines Passworts durch einen Nutzer. Hierdurch kann eine Zugriffskontrolle für die Windenergieanlagensteuerung 10 bereitgestellt werden, die einen Zugriff auf die Windenergieanlagensteuerung erlauben oder verweigern kann.

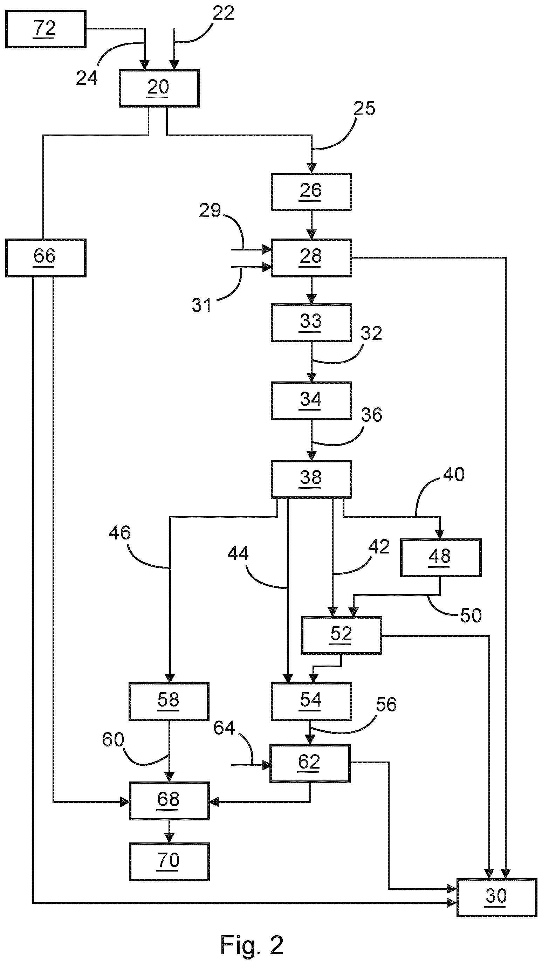

Figur 2 zeigt die Schritte eines Verfahrens für die Zugriffskontrolle im Einzelnen.

In einem Schritt 20 werden eine Zeichenfolge 22 und ein Passwort 24 durch eine Eingabevorrichtung 14 abgefragt. Durch Eingabe einer Taste oder eines Befehls eines Nutzers wird dann eine Bestätigung über die eingegebene Zeichenfolge 22 sowie das Passwort 24 generiert und an den Prozessor 12 der Windenergieanlagensteuerung 10 übertragen, so dass im Schritt 26 eine derartige Bestätigung 25 über eine eingegebene Zeichenfolge empfangen wird.

Die eingegebene Zeichenfolge 22 wird dann einem Schritt 28 übergeben, in dem geprüft wird, ob die Zeichenfolge 22 eine vorbestimmte Anzahl 29 von Zeichen umfasst und ob alle Zeichen der Zeichenfolge einer vordefinierten Menge von Zeichen 31 zuordenbar ist. Ist diese Prüfung negativ, so wird ein Schritt 30 ausgeführt, in dem der Zugriff auf die Windenergieanlagensteuerung verhindert wird. Im Falle, dass diese Prüfung positiv ist, wird die Zeichenfolge 22 in einem Schritt 32 dekodiert und die so abgeleitete Zeichenfolge 33 einem Schritt 34 zugeführt, in dem die abgeleitete Zeichenfolge 33 entschlüsselt wird.

Die entschlüsselte Zeichenfolge 36 wird dann in einem Schritt 38 in mehrere vordefinierte Auswahlen von Zeichen der entschlüsselten Zeichenfolge 36 aufgeteilt. Insbesondere entsteht so eine vordefinierte erste Auswahl 40, eine vordefinierte zweite Auswahl 42, eine vordefinierte dritte Auswahl von Zeichen 44 und eine vordefinierte vierte Auswahl von Zeichen 46. Die erste Auswahl 40 wird dann einem Schritt 48 zugeführt, in dem eine Prüfsumme 50 erzeugt wird. Die Prüfsumme 50 wird dann mit der zweiten Auswahl 42 in einem Schritt 52 verglichen. Ist dieser Vergleich negativ, so wird Schritt 30 ausgeführt und der Zugriff auf die Windenergieanlagensteuerung verhindert. Ist dieser Vergleich im Schritt 52 positiv, so wird in einem Schritt 54 aus der dritten Auswahl 44 eine Zeichenfolge extrahiert, die Nutzerrechten 56 entspricht.

Weiter wird aus der vierten Auswahl 46 eine Nutzerkennung 60 in einem Schritt 58 extrahiert. Weiter wird in einem Schritt 62 geprüft, ob die Nutzerrechte 56 zu einer vordefinierten Menge 64 von Nutzerrechten gehört. Ist dieser Vergleich negativ, so wird im Schritt 30 der Zugriff auf die Windenergieanlagensteuerung verhindert.

Parallel wird ein Schritt 66 ausgeführt, in dem das Passwort 24 überprüft wird, wobei im Falle einer negativen Überprüfung der Schritt 30 ausgeführt wird und der Zugriff auf die Windenergieanlage verhindert wird. Ist die Prüfung 66 positiv, so wird in einem Schritt 68 die Nutzerkennung in einem Speicher der Windenergieanlagensteuerung 10 gespeichert und in einem Schritt 70 ein Zugriff auf die Windenergieanlagensteuerung in Abhängigkeit von den Nutzerrechten freigegeben. Das Passwort 24 ist ein Einmalkennwort und wird in einem vorhergehenden Schritt 72 beispielsweise mit einem mobilen Gerät erzeugt. Die Zeichenfolge 22 wird einem Nutzer zuvor mitgeteilt. Die Zeichenfolge 22 ist hierzu im Vorhinein generiert worden.

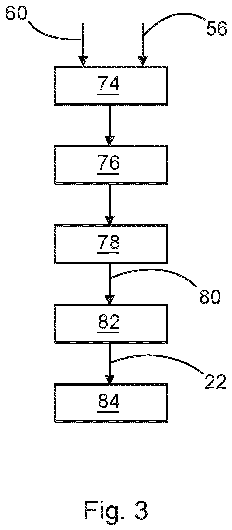

Figur 3 zeigt die Schritte zum Generieren der Zeichenfolge. In einem Schritt 74 wird zunächst eine Nutzerkennung 60 sowie Nutzerrechte 56 bereitgestellt. Im Schritt 76 wird dann eine Prüfsumme 50 anhand der Nutzerkennung 60 sowie der Nutzerrechte 56 bestimmt und in einem Schritt 78 anhand der Nutzerkennung 60, der Nutzerrechte 56 sowie der Prüfsumme 50 in einem Schritt 78 durch Verschlüsselung eine unkodierte Zeichenfolge 80 erzeugt. In einem Schritt 82 wird dann aus dieser unkodierten Zeichenfolge 80 durch Kodierung die Zeichenfolge 22 erzeugt und in einem Schritt 84 ausgegeben.

Diese Zeichenfolge 22 kann dann verwendet werden, um einen Zugriff auf eine Windenergieanlagensteuerung zu erhalten.

## Patentansprüche

1. Verfahren für eine Zugriffskontrolle auf eine Windenergieanlagensteuerung (10), umfassend die von der Windenergieanlagensteuerung (10) ausführbaren Schritte:
- Abfragen (20) einer Zeichenfolge (22) mit einer Eingabevorrichtung (14) der Windenergieanlagensteuerung (10),
- Empfangen (26) einer Bestätigung (25) über eine eingegebene Zeichenfolge (22) von der Eingabevorrichtung (14),
- Entschlüsseln (34) der eingegebenen Zeichenfolge (22) oder einer aus der eingegebenen Zeichenfolge (22) abgeleiteten Zeichenfolge (33) mit einem vordefinierten Verfahren,
- Erzeugen (48) einer Prüfsumme (50) für eine vordefinierte erste Auswahl (40) von Zeichen der entschlüsselten Zeichenfolge (36),
- Vergleichen (52) der erzeugten Prüfsumme (50) mit einer vordefinierten zweiten Auswahl (42) von Zeichen der entschlüsselten Zeichenfolge (36) und
- im Falle eines positiven Vergleichs:
- Extrahieren von Nutzerrechten (56) aus einer vordefinierten dritten Auswahl (44) von Zeichen der entschlüsselten Zeichenfolge (36), die insbesondere Teil der ersten Auswahl (40) ist, und insbesondere, wenn vordefinierte weitere Voraussetzungen erfüllt sind:
- Bereitstellen (70) eines Zugriffs auf die Windenergieanlagensteuerung (10) in Abhängigkeit von den Nutzerrechten (56) und
im Falle eines negativen Vergleichs (52):
- Verhindern (30) eines Zugriffs auf die Windenergieanlagensteuerung.

2. Verfahren nach Anspruch 1, wobei das Verfahren den weiteren Schritt umfasst:
- Extrahieren (58) einer Nutzerkennung (60) aus einer vordefinierten vierten Auswahl (46) von Zeichen der entschlüsselten Zeichenfolge (36) und
- Eintragen der Nutzerkennung (60) in einen Speicher der Windenergieanlagensteuerung.

3. Verfahren nach Anspruch 1 oder 2, wobei nach dem Empfangen (26) einer Bestätigung über eine eingegebene Zeichenfolge (22) geprüft (28) wird,
ob die eingegebene Zeichenfolge (22) nur Zeichen einer vordefinierten Menge von Zeichen, insbesondere eines Zeichensatzes eines vorbestimmten Kodierverfahrens, und/oder eine vorbestimmte Anzahl von Zeichen umfasst, wobei im Falle, dass die Prüfung positiv ist, die weiteren Schritte des Verfahrens ausgeführt werden und im Falle, dass die Prüfung negativ ist, der Zugriff auf die Windenergieanlagensteuerung (10), insbesondere ohne das Ausführen weiterer Schritte, verhindert (30) wird.

4. Verfahren nach einem der Ansprüche 1 bis 3, wobei vor dem Entschlüsseln (34) aus der eingegebenen Zeichenfolge (22) eine abgeleitete Zeichenfolge (33) durch Dekodierung (32) mit einem vorbestimmten Kodierverfahren, wie dem base64 Kodierverfahren, erzeugt wird.

5. Verfahren nach einem der vorhergehenden Ansprüche, wobei geprüft wird, ob die extrahierten Nutzerrechte einer Menge einer vordefinierten Art von Nutzerrechten zuordenbar ist, wobei eine erste vordefinierte weitere Voraussetzung erfüllt ist, wenn die Prüfung positiv ist.

6. Verfahren nach einem der vorhergehenden Ansprüche, wobei der Schritt des Abfragens (20) das Abfragen (20) eines Passworts (24) über die Eingabevorrichtung (14) der Windenergieanlagensteuerung (10) umfasst und der Schritt des Empfangens (20) einer Bestätigung zusätzlich das Empfangen einer Bestätigung über ein eingegebenes Passwort (24) umfasst, wobei das Verfahren weiter das Prüfen (66) des Passworts umfasst und eine zweite vordefinierte weitere Voraussetzung ist, dass die Prüfung des Passworts positiv ist.

7. Verfahren nach Anspruch 6, wobei das Passwort ein Einmalpasswort ist und das Verfahren vorzugsweise das Bestimmen (72) des Einmalpassworts, insbesondere mit einem mobilen Gerät umfasst.

8. Verfahren nach einem der vorhergehenden Ansprüche, wobei die Prüfsumme mit einem cha1-Verfahren bestimmt wird.

9. Verfahren nach einem der vorhergehenden Ansprüche, wobei eine Nachricht insbesondere eine Short-Message-Service-Nachricht an eine hinterlegte Telefonnummer oder eine für eine Nutzerkennung (60) hinterlegte Telefonnummer in Abhängigkeit eines Zugriffs auf die Windenergieanlagensteuerung gesendet wird.

10. Verfahren zum Erzeugen einer Zeichenfolge für ein Verfahren nach einem der vorhergehenden Ansprüche, mit den Schritten:
- Bereitstellen (74) einer Nutzerkennung (60),
- Bereitstellen (74) von Nutzerrechten (56) für die Nutzerkennung (60),
- Erzeugen (76) einer Prüfsumme (50) in Abhängigkeit von der bereitgestellten Nutzerkennung (60) und den bereitgestellten Nutzerrechten (56),
- Bereitstellen einer unkodierten Zeichenfolge (80) aus der Nutzerkennung (60), den Nutzerrechten (56) und der Prüfsumme (50),
- Verschlüsseln (78) der unkodierten Zeichenfolge (80),
- Kodieren (82), der unkodierten Zeichenfolge (80), und
- Ausgabe (84) der Zeichenfolge (22).

11. Computerprogrammprodukt, das Instruktionen umfasst, die wenn sie auf einem Rechner, insbesondere einer Windenergieanlagensteuerung (10) ausgeführt werden, die Windenergieanlagensteuerung veranlassen ein Verfahren nach einem der vorhergehenden Ansprüche auszuführen.

12. Windenergieanlagensteuerung, die eingerichtet ist, das Verfahren nach einem der Ansprüche 1 bis 10 auszuführen.

13. Windenergieanlage mit einer Windenergieanlagensteuerung (10) nach Anspruch 12.

14. Windparkregler mit einer Windenergieanlagensteuerung (10) nach Anspruch 12.

## Claims

1. Method for controlling access to a wind turbine controller (10), comprising the steps executable by the wind turbine controller (10):
- interrogating (20) a character string (22) with an input device (14) of the wind turbine controller (10),
- receiving (26) a confirmation (25) of an input character string (22) from the input device (14),
- decrypting (34) the input character string (22) or a character string (33) derived from the input character string (22) using a predefined method,
- generating (48) a checksum (50) for a predefined first selection (40) of characters of the decrypted character string (36),
- comparing (52) the generated checksum (50) with a predefined second selection (42) of characters of the decrypted character string (36); and
- in case of a positive comparison:
- extracting user rights (56) from a predefined third selection (44) of characters of the decrypted character string (36), which is in particular part of the first selection (40), and in particular if predefined further conditions are met:
- providing (70) access to the wind turbine controller (10) in dependence on user rights (56), and
in case of a negative comparison (52):
- preventing (30) access to the wind turbine controller.

2. Method according to claim 1, comprising the further step of:
- extracting (58) a user identifier (60) from a predefined fourth selection (46) of characters of the decrypted string (36); and
- entering the user identifier (60) into a memory of the wind turbine controller.

3. Method according to claim 1 or 2, wherein after receiving (26) a confirmation about an entered character string (22), it is checked (28)
whether the entered character string (22) comprises only characters of a predefined set of characters, in particular of a character set of a predetermined coding method, and/or a predetermined number of characters, wherein
in case the check is positive, the further steps of the method are executed and in case the check is negative, access to the wind turbine controller (10) is prevented (30), in particular without executing further steps.

4. Method according to any one of claims 1 to 3, wherein prior to decrypting (34), a derived character string (33) is generated from the input character string (22) by decoding (32) using a predetermined encoding method, such as the base64 encoding method.

5. Method according to any one of the preceding claims, wherein it is checked whether the extracted user rights are assignable to a set of a predefined type of user rights, wherein a first predefined further condition is satisfied if the check is positive.

6. Method according to any one of the preceding claims, wherein the step of interrogating (20) comprises interrogating (20) a password (24) via the input device (14) of the wind turbine controller (10), and the step of receiving (20) a confirmation additionally comprises receiving a confirmation of an entered password (24), wherein the method further comprises checking (66) the password, and a second predefined further condition is that the check of the password is positive.

7. Method of claim 6, wherein the password is a one-time password and the method preferably comprises determining (72) the one-time password, in particular with a mobile device.

8. Method according to any one of the preceding claims, wherein the checksum is determined using a cha1 method.

9. Method according to any one of the preceding claims, wherein a message, in particular a short message service message, is sent to a stored telephone number or a telephone number stored for a user ID (60) in response to an access to the wind turbine controller.

10. Method of generating a character string for a method according to any one of the preceding claims, comprising the steps of:
- providing (74) a user identifier (60),
- providing (74) user rights (56) for the user identifier (60),
- generating (76) a checksum (50) in dependence on the provided user identifier (60) and the provided user rights (56),
- providing an uncoded character string (80) of the user identifier (60), the user rights (56) and the checksum (50),
- encrypting (78) the uncoded character string (80),
- encoding (82) the uncoded character string (80), and
- output (84) the character string (22).

11. Computer program product comprising instructions which, when executed on a computer, in particular a wind turbine controller (10), cause the wind turbine controller to execute a method according to any one of the preceding claims.

12. Wind turbine controller adapted to perform the method of any one of claims 1 to 10.

13. Wind turbine having a wind turbine controller (10) according to claim 12.

14. Wind farm controller comprising a wind turbine controller (10) according to claim 12.

## Revendications

1. Procédé pour une commande d'accès à une commande d'éolienne (10), comprenant les étapes pouvant être exécutées par la commande d'éolienne (10) :
- consultation (20) d'une chaîne de caractères (22) avec un dispositif de saisie (14) de la commande d'éolienne (10),
- réception (26) d'une confirmation (25) par l'intermédiaire d'une chaîne de caractères saisie (22) par le dispositif de saisie (14),
- décryptage (34) de la chaîne de caractères saisie (22) ou d'une chaîne de caractères dérivée (33) de la chaîne de caractères saisie (22) avec un procédé prédéfini,
- génération (48) d'une somme de contrôle (50) pour une première sélection (40) prédéfinie de caractères de la chaîne de caractères décryptée (36),
- comparaison (52) de la somme de contrôle (50) générée avec une deuxième sélection (42) prédéfinie de caractères de la chaîne de caractères décryptée (36), et
- dans le cas d'une comparaison positive :
- - extraction de droits d'utilisateurs (56) d'une troisième sélection (44) prédéfinie de caractères de la chaîne de caractères décryptée (36), qui fait partie en particulier de la première sélection (40), et en particulier lorsque d'autres conditions prédéfinies sont remplies :
- - fourniture (70) d'un accès à la commande d'éolienne (10) en fonction des droits d'utilisateurs (56) et
dans le cas d'une comparaison négative (52) :
- empêchement (30) d'un accès à la commande d'éolienne.

2. Procédé selon la revendication 1, dans lequel le procédé comprend l'autre étape :
- d'extraction (58) d'un identifiant (60) d'une quatrième sélection (46) prédéfinie de caractères de la chaîne de caractères décryptée (36), et
- d'enregistrement de l'identifiant (60) dans une mémoire de la commande d'éolienne.

3. Procédé selon la revendication 1 ou 2, dans lequel il est contrôlé (28) après la réception (26) d'une confirmation concernant une chaîne de caractères saisie (22)
si la chaîne de caractères saisie (22) comprend seulement des caractères d'une quantité prédéfinie de caractères, en particulier d'un ensemble de caractères, d'un procédé de codage prédéterminé et/ou d'un nombre de caractères prédéterminé, dans lequel
si le contrôle est positif, les autres étapes du procédé sont exécutées et, si le contrôle est négatif, l'accès à la commande d'éolienne (10) est empêché (30) en particulier sans exécuter d'autres étapes.

4. Procédé selon l'une quelconque des revendications 1 à 3, dans lequel une chaîne de caractères dérivée (33) est générée, avant le décryptage (34) à partir de la chaîne de caractères saisie (22), par décodage (32) avec un procédé de codage prédéterminé comme le procédé de codage Base64.

5. Procédé selon l'une quelconque des revendications précédentes, dans lequel il est contrôlé si les droits d'utilisateurs extraits peuvent être associés à une quantité d'un type prédéfini de droits d'utilisateurs, dans lequel une autre première condition prédéfinie est remplie lorsque le contrôle est positif.

6. Procédé selon l'une quelconque des revendications précédentes, dans lequel l'étape de la consultation (20) comprend la consultation (20) d'un mot de passe (24) par l'intermédiaire du dispositif de saisie (14) de la commande d'éolienne (10), et l'étape de la réception (20) d'une confirmation comprend en supplément la réception d'une confirmation par l'intermédiaire d'un mot de passe (24) saisi, dans lequel le procédé comprend par ailleurs le contrôle (66) du mot de passe et une autre deuxième condition prédéfinie est que le contrôle du mot de passe soit positif.

7. Procédé selon la revendication 6, dans lequel le mot de passe est un mot de passe à usage unique et le procédé comprend de préférence la détermination (72) du mot de passe à usage unique, en particulier avec un appareil mobile.

8. Procédé selon l'une quelconque des revendications précédentes, dans lequel la somme de contrôle est déterminée avec un procédé Cha-1.

9. Procédé selon l'une quelconque des revendications précédentes, dans lequel un message, en particulier un message de service de messages brefs (Short-Message-Service) est envoyé à un numéro de téléphone enregistré ou à un numéro de téléphone enregistré pour un identifiant (60) en fonction d'un accès à la commande d'éolienne.

10. Procédé destiné à générer une chaîne de caractères pour un procédé selon l'une quelconque des revendications précédentes, avec les étapes :
- de fourniture (74) d'un identifiant (60),
- de fourniture (74) de droits d'utilisateurs (56) pour l'identifiant (60),
- de génération (76) d'une somme de contrôle (50) en fonction de l'identifiant (60) fourni et des droits d'utilisateurs (56) fournis,
- de fourniture d'une chaîne de caractères non codée (80) à partir de l'identifiant (60), des droits d'utilisateurs (56) et de la somme de contrôle (50),
- de cryptage (78) de la chaîne de caractères non codée (80),
- de codage (82) de la chaîne de caractères non codée (80), et
- d'émission (84) de la chaîne de caractères (22).

11. Produit de programme informatique, qui comprend des instructions qui, lorsqu'elles sont exécutées sur un ordinateur, en particulier une commande d'éolienne (10), amènent la commande d'éolienne à exécuter un procédé selon l'une quelconque des revendications précédentes.

12. Commande d'éolienne, qui est mise au point pour exécuter le procédé selon l'une quelconque des revendications 1 à 10.

13. Eolienne avec une commande d'éolienne (10) selon la revendication 12.

14. Régulateur de parc éolien avec une commande d'éolienne (10) selon la revendication 12.
